Europäisches Patentamt

European Patent Office

Office européen des brevets

(19)

(11) Numéro de publication : **0 623 867 A1**

# (12) DEMANDE DE BREVET EUROPEEN

(21) Numéro de dépôt : **94400956.2**

(22) Date de dépôt : **03.05.94**

(51) Int. Cl.$^5$ : **G06F 1/03**

(30) Priorité : **07.05.93 FR 9305518**

(43) Date de publication de la demande :
**09.11.94 Bulletin 94/45**

(84) Etats contractants désignés :
**DE FR GB IT**

(71) Demandeur : **THOMSON-CSF**
**173, Boulevard Haussmann**
**F-75008 Paris (FR)**

(72) Inventeur : **Lazarus, Michel Roger**
**THOMSON-CSF,**
**SCPI,**
**B.P. 329**
**F-92402 Courbevoie Cedex (FR)**

(74) Mandataire : **Benoit, Monique et al**
**THOMSON-CSF**
**SCPI**
**B.P. 329**
**50, rue Jean-Pierre Timbaud**
**F-92402 Courbevoie Cédex (FR)**

(54) **Procédé et dispositif de génération d'un signal à fréquence commandée.**

(57)    L'invention concerne un procédé et un dispo-sitif de génération d'un signal à fréquence commandée.

La fréquence est commandée par la variation de sa phase, la phase étant incrémentée d'un pas constant ($\Delta\varphi$) à l'intérieur d'une période (To) du signal généré, cette incrémentation ayant lieu à chaque période (Tc) d'un signal d'horloge.

La phase étant représentée par un nombre binaire (P), la phase correspondant à $2\pi$ quand tous les bits du nombre binaire (P) sont égaux à 1, le procédé consiste, dans chaque période (To) du signal généré, à calculer une erreur de phase (Er($\varphi$)), cette erreur de phase étant représentée par la différence entre un premier nombre binaire (100...0) représentant $\pi$ et le nombre binaire (P(k)) obtenu par incrémentation du pas de phase (M) et immédiatement inférieur au premier nombre binaire (100 ... 0) puis à corriger la phase (P) de l'erreur de phase (Er($\varphi$)) à partir du nombre binaire calculé représentant cette erreur, la correction étant effectuée sur un signal synchrone du bit de poids fort (MSB) du nombre binaire (P) représentant la phase.

Application : systèmes de synthèse de fré-quence.

FIG.2

EP 0 623 867 A1

La présente invention concerne un procédé et un dispositif de génération de signaux à fréquence commandée. Elle s'applique notamment à la génération de signaux à fréquence commandée utilisés dans des systèmes de synthèse de fréquence de télécommunication par exemple. Plus généralement, elle s'applique à tous systèmes de synthèse de fréquence nécessitant un signal logique de grande pureté spectrale.

La commande d'une loi de phase appliquée à un signal permet de commander sa fréquence. Pour générer une loi de phase il est connu d'utiliser des systèmes de génération appelés synthèse numérique directe. Le principe de la synthèse numérique directe consiste à générer une loi de phase au moyen d'un accumulateur de phase numérique à grand nombre N de bits, 32 par exemple, dont l'entrée est un nombre M représentant l'accroissement de phase. A chaque coups d'horloge qui lui est appliqué, l'accumulateur numérique délivre à sa sortie un nombre P(k) tel que:

$$P(k) = P(k-1) + M \quad (1)$$

où le nombre P(k-1) est le nombre délivré au coup d'horloge précédant.

Le nombre P(k) adresse une mémoire contenant une loi d'amplitude en fonction de la phase, la loi la plus usuelle étant une loi sinusoïdale inscrite dans une table mémorisée. Le nombre de sortie de la mémoire est appliqué à un convertisseur numérique-analogique rapide dont le signal de sortie est une onde sinusoïdale échantillonnée si la loi est sinusoïdale. Un filtre passe-bas connecté en sortie du convertisseur numérique analogique réduit le bruit et les résidus dus à l'échantillonnage.

En notant $\Delta\varphi$ l'accroissement de phase correspondant au nombre M d'entrée de l'accumulateur numérique à N bits, la relation liant $\Delta\varphi$ à M est la suivante :

$$\Delta\varphi = \frac{M}{2^N} 2\pi \quad (2)$$

En notant Tc la période d'horloge commandant l'accumulateur numérique et To la fréquence du signal généré en sortie du convertisseur numérique-analogique, la relation liant $\Delta\varphi$, Tc et To est la suivante :

$$\frac{\Delta\varphi}{Tc} = \frac{2\pi}{To} \quad (3)$$

En notant $Fc = \frac{1}{Tc}$ et $Fo = \frac{1}{To}$ les fréquences respectives du signal d'horloge et du signal généré, la relation liant ces deux fréquences Fc, Fo est issue des relations précédentes (2) et (3), elle est la suivante :

$$Fo = \frac{M}{2^N} Fc \quad (4)$$

L'intérêt d'un système à synthèse numérique directe est donc de pouvoir commander presque instantanément la fréquence de sortie en faisant varier le nombre M d'entrée de l'accumulateur numérique sans qu'il y ait de discontinuité de phase et selon une loi quelconque.

Cependant un tel système présente plusieurs inconvénients. En particulier la pureté spectrale du signal généré est limitée par plusieurs paramètres, notamment :

- le rapport signal sur bruit du signal délivré par le convertisseur numérique-analogique,
- des raies parasites dues aux mélanges des spectres du signal d'horloge et de l'échantillonnage du signal en sortie du convertisseur numérique-analogique,
- des raies parasites dues à des phénomènes du convertisseur numérique-analogique connus sous le terme anglo-saxon de "glitche" ou à la distorsion harmonique du convertisseur, les "glitches" correspondant eux à l'absence de simultanéité rigoureuse dans le changement d'état des bits du convertisseur, occasionnant des écarts de temps et des écarts de poids parasites.

Ces dernières raies sont particulièrement gênantes lorsque le rapport Fc/Fo devient faible, c'est à dire lorsque la fréquence Fo du signal de sortie se rapproche de la fréquence Fc du signal d'horloge, c'est à dire lorsque le nombre M à l'entrée de l'accumulateur de phase devient important.

- Enfin, la raie la plus puissante est située à la fréquence Fc-Fo, elle est due à l'erreur de temps variant de - Tc/2 à + Tc/2 dans la période To du signal généré, cette erreur de temps générant une erreur de phase. Il en résulte une modulation de phase parasite d'amplitude D$\varphi$ définie par la relation suivante :

$$D\varphi = 2\pi \frac{Tc}{2To} \quad (5)$$

Lorsque la fréquence du signal généré est très faible devant la fréquence du signal d'horloge, c'est à dire lorsque To est très grand devant Tc, cette modulation parasite peut facilement être filtrée, notamment à l'aide d'un filtre en sortie du convertisseur numérique-analogique. Cependant, quand la fréquence du signal généré augmente et se rapproche donc du signal d'horloge, un tel filtrage n'est plus efficace.

Le but de l'invention est de pallier les inconvénients précités, notamment en améliorant la pureté spectrale d'un signal à fréquence commandée sur une large bande de fréquence par une loi de commande continûment variable de période à période.

A cet effet l'invention a pour objet un procédé de génération d'un signal à fréquence commandée, la fréquence étant commandée par la variation de sa phase, la phase étant incrémentée d'un pas constant à l'intérieur d'une période du signal généré, cette incrémentation ayant lieu à chaque période d'un signal d'horloge, la phase étant représentée par un nombre binaire, la phase correspondant à 2$\pi$ quand tous les bits du nombre binaire sont égaux à 1, caractérisé en ce qu'il consiste dans chaque période du signal généré dans une première étape à calculer une erreur de phase cette erreur de phase étant représentée par la différence entre un premier nombre binaire représentant $\pi$ et le nombre binaire obtenu par incrémentation du pas de phase et immédiatement inférieur au premier nombre binaire et dans une deuxième étape à corriger la phase de l'erreur de phase à partir du nombre binaire calculé représentant cette erreur, la correction étant effectuée sur un signal synchrone du bit de poids fort du nombre binaire représentant la phase.

L'invention a également pour objet un dispositif pour la mise en oeuvre du procédé précité.

L'invention a pour principaux avantages qu'elle permet une génération de fréquences élevées tout en assurant une grande pureté spectrale, qu'elle est simple à mettre en oeuvre, ses circuits pouvant facilement s'inclure dans un circuit intégré, et qu'elle est économique.

D'autres caractéristiques et avantages de l'invention apparaîtront à l'aide de la description qui suit faite en regard de dessins annexés qui représentent :

- la figure 1, un synoptique d'un exemple de générateur de fréquence à synthèse numérique directe ;
- la figure 2, une illustration du calcul d'une erreur de phase selon l'invention ;
- les figures 3 et 4, un premier mode de réalisation possible pour la mise en oeuvre du procédé selon l'invention ;
- la figure 5, un mode de réalisation possible d'un décaleur utilisé dans le mode précité ;
- la figure 6, un exemple de réalisation d'un détecteur utilisé dans le mode précité ;
- la figure 7, une illustration, à l'aide de chronogrammes, du fonctionnement d'un dispositif selon la figure 4 ;
- la figure 8, un synoptique d'un système de synthèse de fréquence utilisant un dispositif selon la figure 4 ;
- la figure 9, un deuxième mode de réalisation possible pour la mise en oeuvre du procédé selon l'invention ;
- la figure 10, un synoptique d'un système de synthèse de fréquence utilisant un dispositif selon la figure 9.

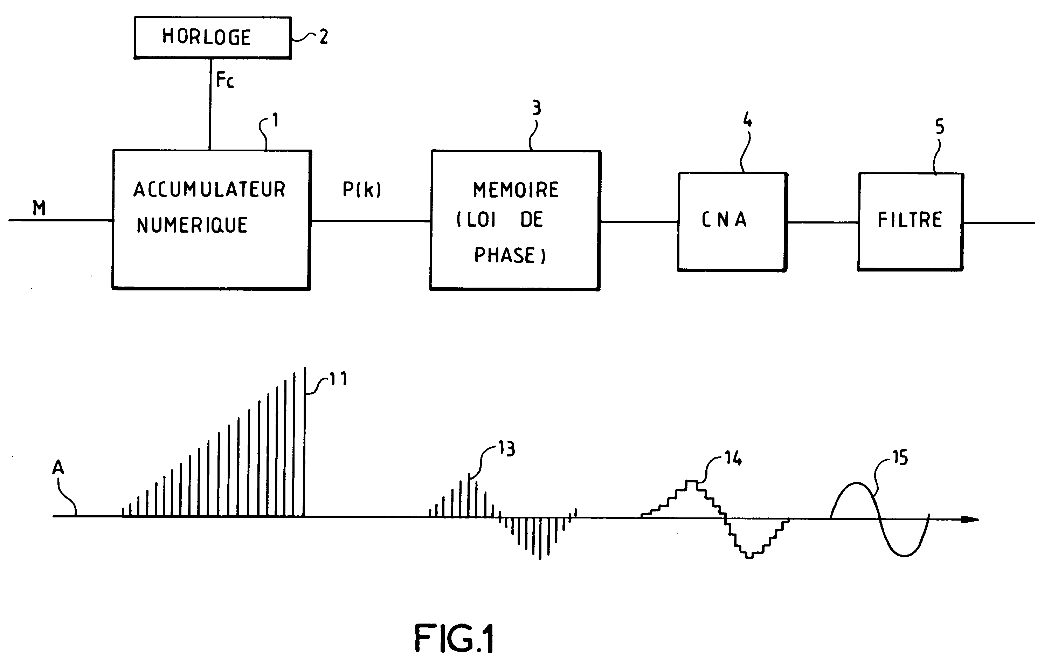

La figure 1 présente le synoptique d'un exemple de générateur de fréquence à synthèse numérique directe. Celui-ci est constitué d'un accumulateur numérique 1 commandé par une horloge 2 délivrant un signal d'horloge ayant une fréquence donnée Fc. Le nombre P(k) codé sur un nombre N de bits, en sortie de l'accumulateur 1 est fonction du nombre M à son entrée conformément à la relation (1) précédente établie. La sortie de l'accumulateur 1 est reliée à une mémoire 3, morte ROM ou vive RAM. La sortie de l'accumulateur 1 constituée d'un bus de N bits et est reliée aux entrées d'adressage de la mémoire 3. Cette dernière contient une loi d'amplitude en fonction de la phase représentée par le nombre P(k) en sortie de l'accumulateur. Cette loi est par exemple sinusoïdale. La sortie de la mémoire 3 codant l'amplitude du signal est reliée à un convertisseur numérique-analogique 4 délivrant un signal échantillonné, lequel est filtré par un filtre 5 connecté à la sortie du convertisseur numérique-analogique.

Des fonctions représentées le long d'un axe A illustrent les différents états obtenus en sortie des composants successifs du système de génération sur une période du signal de sortie. Une fonction 11 illustre les valeurs successives prises en sortie de l'accumulateur numérique 1. L'accroissement d'une valeur à l'autre est égal au nombre M en entrée de l'accumulateur 1. Une fonction 13 illustre les valeurs successives prises en sortie de la mémoire 3 dans le cas par exemple où cette dernière mémorise une loi sinusoïdale. Une fonction 14 illustre la fonction analogique échantillonnée obtenue en sortie du convertisseur numérique-analogique et une courbe 15 illustre la sortie du signal obtenu en sortie du filtre 5. Sa fréquence est commandée par le nombre M à l'entrée de l'accumulateur 1. Plus M est grand, plus vite la sortie de l'accumulateur 1 atteint ou dépasse la valeur $2^N$ de pleine échelle et donc plus la période du signal de sortie est faible donc sa fréquence Fo élevée, la fréquence de sortie Fo étant limitée par la moitié de la fréquence d'horloge Fc. Plus la fréquence Fo augmente, plus les inconvénients précités deviennent prépondérants, notamment en ce qui concerne l'influence de l'erreur de phase précitée, l'erreur de temps variant entre -Tc/2 et + Tc/2 dans la période To du signal de sortie, Tc étant la période du signal délivré par l'horloge 2. A fréquence élevée, le filtre 5 en sortie du convertisseur numérique-analogique 4 ne filtre plus la modulation de phase parasite qui en résulte.

Les systèmes de synthèse de fréquence prenant en compte principalement l'information de fréquence et non pas la forme du signal, le dispositif selon l'invention s'attache à générer des fronts dont la fréquence est bien déterminée, affranchis notamment de la modulation de phase précitée définie par la relation (5) ainsi que des limites introduites par un convertisseur numérique-analogique. A cet effet, le principe de l'invention consiste notamment à utiliser un accumulateur numérique à N bits du type de celui 1 précédemment décrit qui reçoit un nombre M en entrée et qui fournit un nombre P(k), à prendre par exemple comme référence du signal généré l'état du bit MSB de poids fort du bus de sortie de l'accumulateur et à faire, à chaque période To du signal généré, un calcul de l'erreur de phase précitée qui existe dans chaque période To.

A partir de cette erreur calculée, chaque période est corrigée par exemple par un retard de temps égal à celui générant l'erreur de phase. Ce retard est par exemple crée au moyen d'un générateur de retard programmable dont l'étendue temporelle est par exemple égale à la période Tc de l'horloge qui commande l'accumulateur numérique, le signal généré étant alors la copie de l'état du bit MSB de poids fort ou un signal qui lui est synchrone corrigé du retard de temps précité. Dans le cas où le signal généré de fréquence Fo est recopié par une boucle de phase, la correction peut consister par exemple à corriger la phase du signal de sortie en convertissant l'erreur de phase, calculée numériquement, en valeur analogique et en la soustrayant par exemple à la tension d'erreur du détecteur de phase de la boucle de phase.

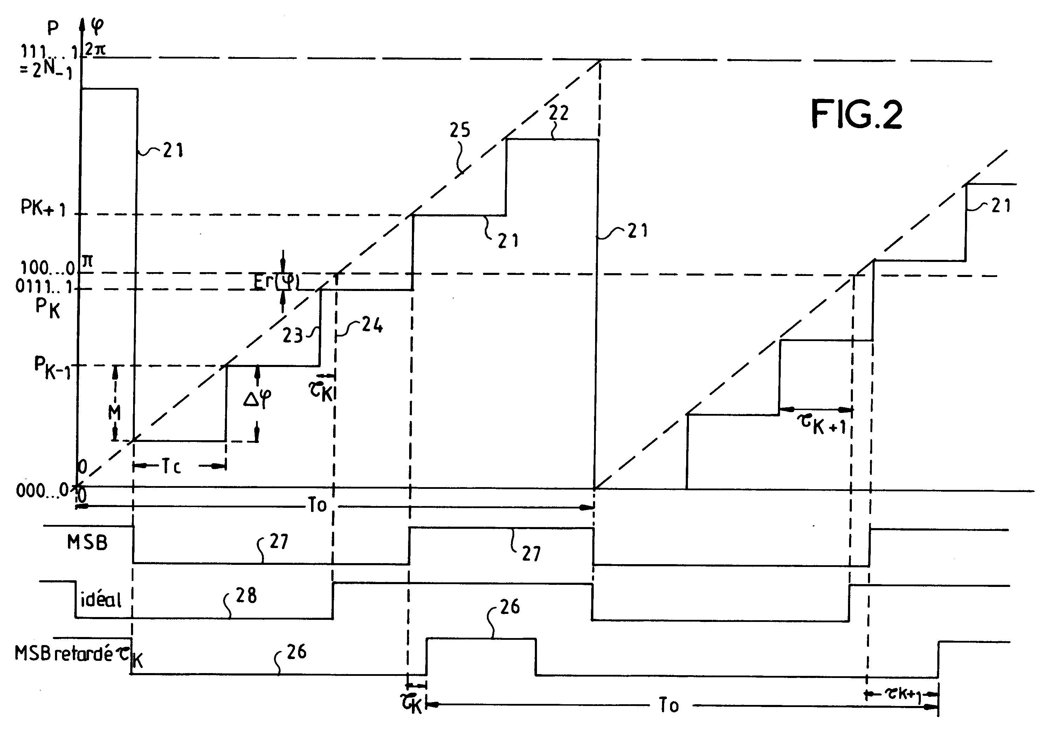

La figure 2 illustre le calcul de l'erreur de phase, ainsi que l'obtention d'un signal généré à partir du bit MSB de poids fort du bus de sortie de l'accumulateur numérique. Ce dernier analogue à celui 1 de la figure 1 est par exemple constitué d'un premier registre à N bit appliqué à la première entrée d'un sommateur à N bits dont la sortie est rebouclée sur un deuxième registre à N bits appliqué à la deuxième entrée du sommateur, le fonctionnement de l'accumulateur étant régi suivant la relation (1) précédemment établie. Les deux registres sont commandés par une horloge ayant une fréquence donnée Fc et une période Tc = 1/Fc.

Sur la figure 2, un premier axe t représente le temps et un deuxième axe P, $\varphi$ représente la phase, la phase étant repérée par une valeur $\varphi$ en radians comprise 0 et $2\pi$ codée par une valeur numérique P comprise entre 0 et $2^N-1$, N étant le nombre de bits de l'accumulateur numérique. Sur la figure 2, les valeurs du nombre P représentées sont codées en binaire. P et $\varphi$ sont liés par la relation suivante :

$$\varphi = \frac{P}{2^N} 2\pi \quad (6)$$

Une courbe 21 représente l'allure de la phase P en sortie de l'accumulateur numérique en fonction du temps t. Les sauts de phase $\Delta\varphi$ d'une valeur à la suivante sont égaux au nombre M appliqué en entrée de l'accumulateur. La phase reste à une valeur constante, échantillonnée, pendant une période Tc d'horloge. A partir d'un dernier pallier 22 représentant une valeur échantillonnée de la phase $\varphi$, et suite à un coup d'horloge, la nouvelle valeur numérisée de la phase dépasse $2^N$ et la valeur codée en sortie de l'accumulateur passe à une valeur comprise entre 0 et son nombre d'entrée M.

La relation liant le saut de phase $\Delta\varphi$ et le nombre M est donnée par la relation (2) :

$$\Delta\varphi = \frac{M}{2^N} 2\pi \quad (2)$$

Le bit de poids fort MSB du nombre P, codé sur N bits, passe de 0 à 1 lorsque la phase $\varphi$ devient supérieure ou égale à $\pi$. En notant P(k) la valeur du nombre P lorsque la phase $\varphi$ est juste au dessous de $\pi$ et P(k+1) la valeur suivante située juste au dessus de $\pi$, l'équation du sommateur définie par la relation (1)

donne :

$$P(k + 1) = P(k) + M \quad (1)$$

De même si P(k-1) représente la valeur du nombre P immédiatement inférieure à P(k), il vient :

$$P(k) = P(k - 1) + M \quad (1')$$

En notant Er($\varphi$) l'erreur de phase correspondant à l'écart de temps $\tau k$ entre le passage 23 de P(k-1) à P(k) et le passage 24 à la valeur du nombre P codant $\pi$, c'est à dire à la valeur P = $2^{N-1}$ = 1000...0 en binaire, il vient

$$Er(\varphi) = \pi - \frac{P(k)}{2^N} 2\pi \quad (7)$$

d'où la relation suivante :

$$Er(\varphi) = \frac{2^{N-1} - P(k)}{2^N} 2\pi \quad (8)$$

liant Er($\varphi$), P(k) et N, les deux dernières valeurs étant connues.

Selon l'invention, cette erreur de phase Er($\varphi$) est calculée à chaque période, puis chaque période est corrigée en fonction de cette erreur de phase. L'erreur de phase Er($\varphi$) corrigée sur chaque période To comprend l'erreur de temps comprise entre $-\frac{Tc}{2}$ et $\frac{Tc}{2}$ dans la période To, phénomène qui crée des modulations parasites. Cette correction de phase dans chaque période tend donc à supprimer ces modulations parasites. Dans le cas où une valeur de P en sortie de l'accumulateur code $\pi$, il n'y a pas d'erreur de temps sur la période To, donc pas d'erreur de phase.

La figure 2 illustre une première méthode possible de correction.

Dans cette première méthode, le signal de sortie généré représenté par une courbe 26 est synchronisé sur le front montant du bit de poids fort MSB du nombre P, c'est à dire sur le bit de poids fort MSB du bus de sortie de l'accumulateur numérique.

L'écart de temps correspondant à l'erreur de temps précitée notée $\tau k$, l'erreur de phase Er($\varphi$) correspondante, le saut de phase $\Delta\varphi$ et la période d'horloge Tc sont liés par la relation suivante :

$$\frac{\Delta\varphi}{Tc} = \frac{Er(\varphi)}{\tau k} \quad (9)$$

car la phase $\varphi$ varie de façon discontinue mais linéairement en fonction du temps. Les points de fonctionnement dans le plan des axes P, $\varphi$ et t sont donc tous situés sur une droite 25.

En combinant les relations (2), (8) et (9), la relation suivante est obtenue :

$$\tau_k = \frac{2^{N-1} - P(k)}{M} Tc \quad (10)$$

Elle donne $\tau_k$ en fonction de N, M, P(k) et Tc, ces quatre dernières valeurs étant connues.

Sur la figure 2, un signal 27 représente l'état du bit de poids fort MSB du nombre P en sortie de l'accumulateur numérique. Une courbe 28 représente un signal idéal de période égale à To.

La courbe 26 qui représente le signal de sortie généré est tel que sont front montant de début de période est retardé par rapport au front montant du bit MSB du temps $\tau_k$ défini selon la relation (10) précédente. Cela permet de corriger l'erreur de phase Er($\varphi$). Au cours de la période suivante un retard $\tau_{k+1}$ est calculé de façon analogue au retard $\tau_k$.

Dans l'exemple de représentation de la figure 2, la valeur de la période To du signal de sortie est d'environ 5 fois celle de la période Tc de l'horloge, cas où les modulations parasites précitées ne sont plus négligeables.

En notant :

$$Y = \frac{2^{N-1} - P(k)}{M} \quad (11)$$

d'après la relation (10) il vient :

$$\tau_k = Y\, Tc$$

Pour réaliser le retard $\tau_k$, il est alors possible d'utiliser un générateur de retard programmable. Ce générateur retarde le front montant d'un retard $t_r$ proportionnel à un nombre binaire Y', codé sur 8 bits par exemple, tel que :

$$t_r = \frac{Y'}{2^8}\, T\,pe \quad (12)$$

où Tpe est le retard de pleine échelle ajustable au moyen de résistances ou de condensateurs par exemple, et où Y' est constitué par exemple des 8 premiers bits significatifs du nombre Y défini par la relation (11). Dans ce cas, en particulier Tpe peut être ajusté pour être égal à la période Tc d'horloge, le retard $t_r$ obtenu est égal alors à $\tau_k$. Le nombre Y' est codé sur 8 bits à titre d'exemple, il pourrait être codé sur un nombre différent de bits.

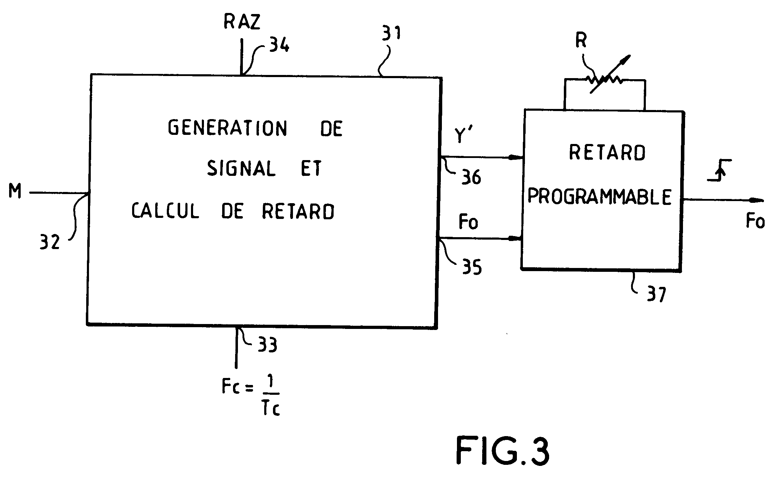

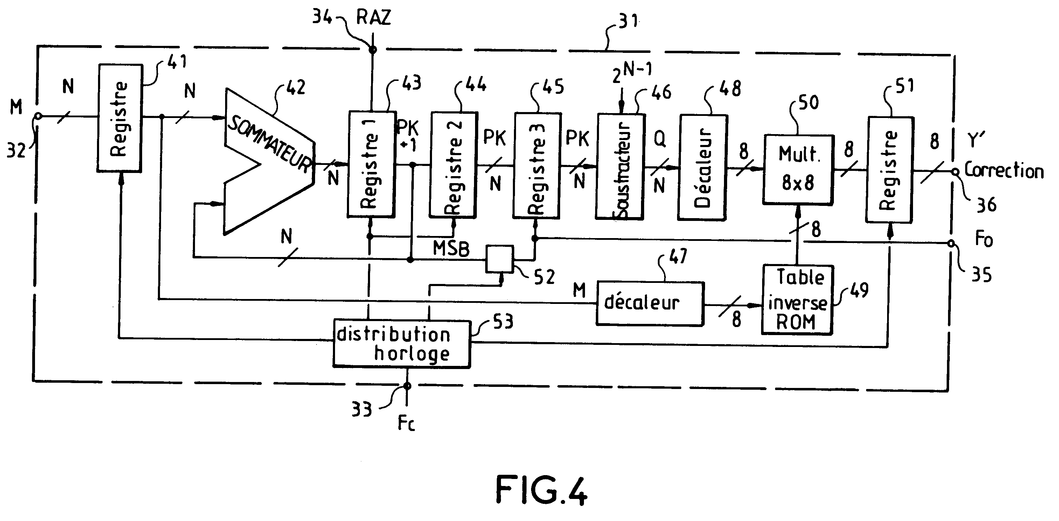

Les figures 3 et 4 présentent un premier mode de réalisation possible pour la mise en oeuvre du procédé selon l'invention.

La figure 3 présente le synoptique de ce mode de réalisation. Un circuit 31 de génération de signal et de calcul de retard comprend au moins deux entrées 32, 33.

La première 32 est par exemple un bus sur lequel est codé le nombre M précité, la deuxième 33 est reliée à l'horloge de fréquence $Fc = \frac{1}{Tc}$. A ces deux entrées peut être ajoutée une entrée 34 de remise à zéro (RAZ) du circuit 31. Une première sortie 35 délivre un premier signal logique variant à une fréquence Fo et une deuxième sortie 36 délivre un nombre Y', codé par exemple sur un bus de 8 bits. Ce nombre Y' représente le retard à appliquer au signal logique de sortie.

Les deux sorties 35, 36 du circuit 31 sont par exemple reliées à un circuit 37 de génération de retard programmable dont le fonctionnement est régi par la relation (12) précédente et dont la valeur de pleine échelle est ajustée à la période d'horloge Tc par exemple par réglage d'une résistance R. Ce type de circuit 37 est connu de l'homme du métier. Il délivre en sortie un signal corrigé à chaque période d'un retard de temps fonction de la valeur Y' affichée en sortie 36 du circuit 31 de génération de signal et de calcul de retard.

Le signal Fo, qui est la recopie du bit de poids fort MSB commande par exemple le circuit de retard 37 sur le front montant du bit MSB, le retard étant appliqué à partir de ce front montant. La sortie du circuit de retard 37 délivre alors le signal corrigé, à la fréquence Fo.

La figure 4 présente un exemple de réalisation possible de ce circuit 31. Ce circuit contient notamment un accumulateur numérique, des moyens de mémorisation du nombre P(k), des moyens de soustraction de ce nombre P(k) à $2^{N-1}$ et des moyens de division par M de la quantité P(k) - $2^{N-1}$.

Le circuit 31 comprend donc au moins par exemple :

- un registre d'entrée 41 à N bits sur lequel est appliqué le nombre M ;
- un accumulateur numérique à N bits constitué d'un sommateur 42 et d'un premier registre 43 relié à la sortie du sommateur et donnant le nombre P(k+1), une entrée du sommateur 42 étant reliée à la sortie du registre d'entrée 41 et son autre entrée étant reliée à la sortie du premier registre 43 ;
- un deuxième registre à N bits 44 relié à la sortie du premier registre 43 et donnant le nombre P(k) ;
- un troisième registre à N bits 45 relié à la sortie du deuxième registre 44, validé par le bit de poids fort MSB du nombre P de sortie de l'accumulateur et qui mémorise le nombre P(k) ;
- un soustracteur à N bits 46 relié à la sortie du troisième registre 45, calculant le nombre Q = $2^{N-1}$-P(k) ;
- un premier décaleur 47 prenant par exemple les 8 premiers bits significatifs du nombre M, relié à la sortie du registre d'entrée 41 ;
- un deuxième décaleur 48 relié à la sortie du soustracteur 46 et prenant les 8 premiers bits significatifs du nombre Q précité ;
- une table des inverses 49, mémorisée par exemple dans une mémoire morte (ROM) dont le bus d'adresse est relié à la sortie du premier décaleur 47, cette table délivrant le nombre 1/M inverse de M ;
- un multiplieur 50, 8 bits x 8 bits par exemple, dont une entrée est reliée à la sortie du deuxième décaleur 48 et l'autre entrée est reliée au bus de données de la mémoire contenant la table des inverses 49, le multiplicateur réalisant le produit Q x $\frac{1}{M}$ ;
- un registre de sortie 51, à 8 bits par exemple, relié à la sortie du multiplieur 50 et échantillonné par l'horloge à la fréquence Fc. Ce registre de sortie 51 délivre la consigne de correction Y' pour le circuit 37 de génération de retard programmable ;

- un circuit de synchronisation 52, une bascule par exemple délivrant le bit MSB échantillonné à la fréquence d'horloge Fc et retardé de kTc, k étant inférieur à 1. L'entrée de ce circuit 52 est reliée au bit de poids fort du bus de sortie du premier registre, ce bit représentant le bit de poids fort MSB du nombre en sortie de l'accumulateur. Sa sortie est reliée à l'entrée de validation du troisième registre 45, cette sortie constitue également la sortie 35 délivrant le signal logique de fréquence Fo ;

- un circuit 53 de distribution de l'horloge de commande, fonctionnant à la fréquence Fc. Par l'intermédiaire de ce circuit, l'horloge est distribuée aux entrées de validation du registre d'entrée 41, des premier et deuxième registres 43, 44, le premier comportant en outre par exemple une entrée de remise à zéro (RAZ), du circuit de synchronisation 52 et du registre de sortie 51.

Excepté les décaleurs 47, 48 qui détectent les premiers, 8 par exemple, bits significatifs d'un mot de N bits, tous ces circuits sont connus de l'homme du métier.

L'utilisation des décaleurs n'est pas obligatoire, cependant, sans leur utilisation il faudrait une table des inverses à N bits et un multiplieur NxN bits, ce qui peut entraîner des temps de réponses élevés si N est grand, égal à 32 par exemple, alors que par ailleurs si le circuit 37 de génération de retard utilise seulement 8 bits par exemple, seuls les 8 premiers bits du résultats sont utilisés pour le commander. Par ailleurs, en cas d'intégration, une table des inverses à 32 bits par exemple et un multiplieur 32 bits x 32 bits occupent une grande surface de silicium, d'où l'intérêt de réduire leurs nombres de bits.

L'utilisation de décaleurs sur les nombres M et Q permet donc de réduire :

- la table des inverses, à 8 bits par exemple ;
- le multiplicateur, à 8 x 8 bits par exemple ;
- le temps de réponse du calcul de la consigne de retard Y'.

Un décaleur classique à registres à décalage présente l'inconvénient de nécessiter plusieurs coups d'horloge, au moins autant que de bits à décaler. Par exemple, pour sélectionner les 8 premiers bits significatifs d'un nombre de 32 bits, il faudrait 24 périodes Tc de l'horloge. Or, s'il faut pouvoir générer un signal à la fréquence maximum de Fc/2, fréquence de Nyquist, Fc étant la fréquence de l'horloge, il faut que le temps de propagation Td du décaleur soit très inférieur à 2 périodes Tc.

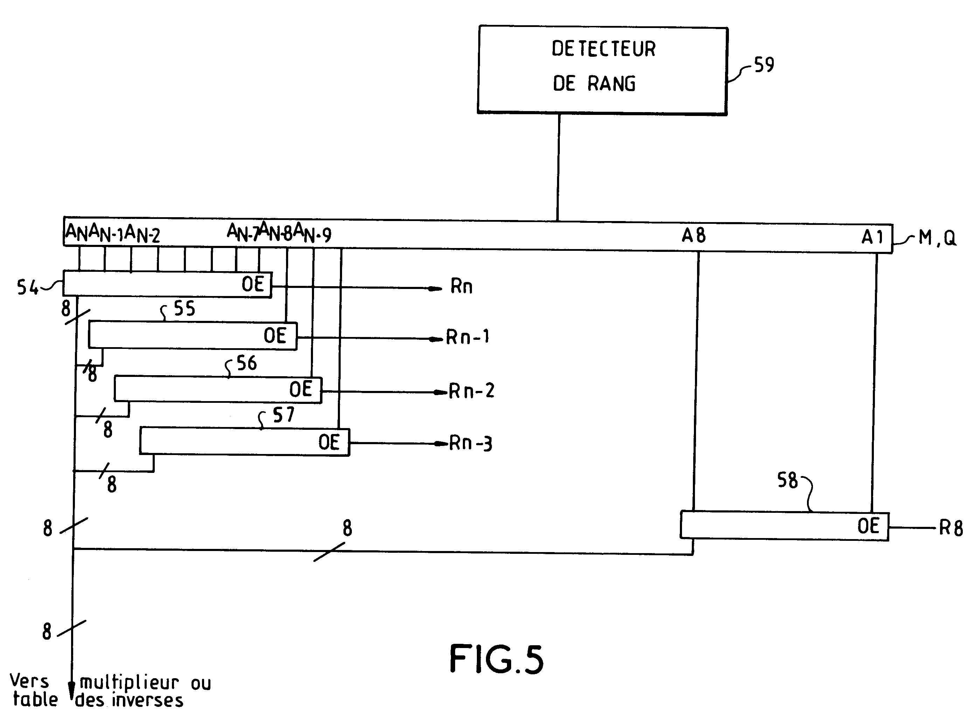

La figure 5 présente un mode possible de réalisation d'un décaleur rapide répondant à ce besoin. Il n'est pas tributaire de l'horloge de fréquence Fc. Il est totalement câblé, ce qui assure un temps de réponse minimum.

Un décaleur 47, 48 est par exemple constitué de N-8 registres 54, 55, 56, 57, 58 à bascule à 8 bits et à sortie 3 états, N étant le nombre de bits précité. Tous ces registres sont décalés les uns par rapport aux autres d'un bit et toutes leurs sorties sont connectées entre-elles, la sélection de chacun des registres se faisant par une commande d'activation appliquée à son entrée d'activation OE. Les nombres M et Q étant codés sur N bits, ils s'écrivent sous la forme suivante: $A_N A_{N-1} A_{N-2}...A_i...A_1$, un bit $A_i$ prenant la valeur 0 ou 1. Le décalage des registres est donc tel que les 8 premiers bits $A_N A_{N-1}...A_{N-7}$ sont connectés aux entrées d'un premier registre 54, les 8 premiers bits pris à partir du deuxième bit $A_{N-1}$, c'est à dire $A_{N-1}, A_{N-2}, ... A_{N-8}$ sont connectés aux entrées d'un deuxième registre 55, les 8 premiers bits pris à partir du troisième bit $A_{N-2}$, c'est à dire $A_{N-2}; A_{N-3}, A_{N-9}$ sont connectés aux entrées d'un troisième registre 56, enfin les 8 derniers bits $A_8...A_1$ sont connectés au dernier registre 58.

Les sorties des registres 54, 55, 56, 57, 58, sont reliées entre elles soit au bus d'adresse de la table des inverses 49 quand ils font partie du décaleur 47 du nombre M, ou à l'entrée du multiplieur 50 quand ils font partie du décaleur 48 du nombre Q.

Les entrées d'activation OE des registres sont commandées par des signaux $R_n, R_{n-1}, R_{n-2}, R_{n-3},...R_8$ indiquant le rang de décalage. Un seul de ces signaux commande les entrées d'activation à la fois.

Ces signaux de rang sont fournis par un détecteur de rang 59 relié par exemple au nombre M. Le nombre M étant supérieur au nombre Q, la détection du rang de décalage est fait sur le nombre M et les commandes de rang $R_n, R_{n-1}, R_{n-2}, ...R_8$ sont appliquées au deux décaleurs 47, 48, celui de M et celui de Q.

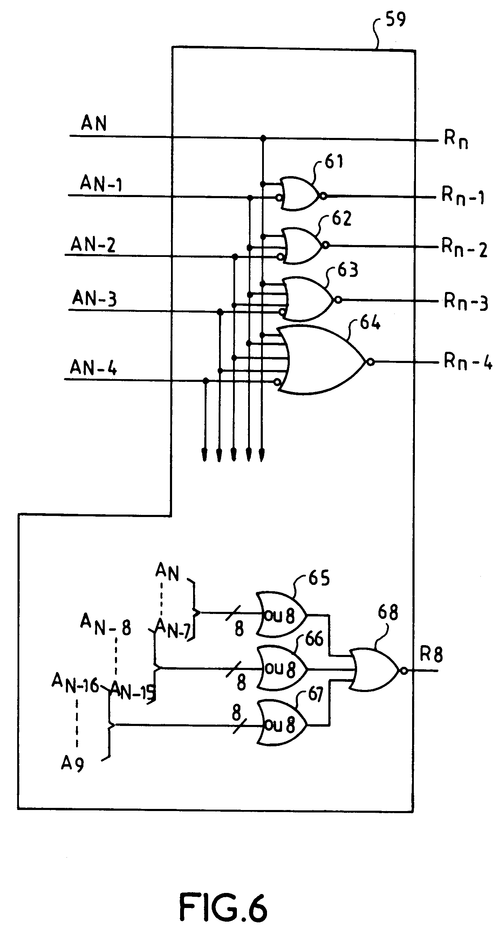

La figure 6 présente un exemple de réalisation d'un détecteur 59. La détection du rang est faite par des portes logiques 61, 62, 63, 64,...65, 66, 67, 68 décodant le premier bit du mot M à l'état 1. Les structures de ces portes et leur câblage sont réalisés de telle sorte que les rangs obtenus en sortie des portes logiques 61, 62, 63, 64, 68 vérifient les équations booléennes suivantes :

$$\text{rang } n = A_N$$
$$\text{rang } n-1 = \overline{A_N} \cdot A_{N-1}$$
$$\text{rang } n-2 = \overline{A_N} \cdot \overline{A_{N-1}} \cdot A_{N-2}$$
$$\text{rang } i = \overline{A_N} \cdot \overline{A_{N-1}} ... \overline{A_{N-i+1}} \cdot A_{N-i}$$
$$\text{rang } 8 = \overline{A_N} \cdot \overline{A_{N-1}} ... \overline{A_9} \cdot \overline{A_8}$$

De cette façon, le temps de propagation Rpd d'un décaleur 47, 48 est au maximum à la somme du temps de propagation des circuits réalisant l'équation booléenne du rang 8, du temps de propagation des registres et du temps d'établissement de leurs sorties trois états. Compte tenu de certaines technologies connues, ce temps de propagation Tpd peut alors être inférieur à 10 ns par exemple.

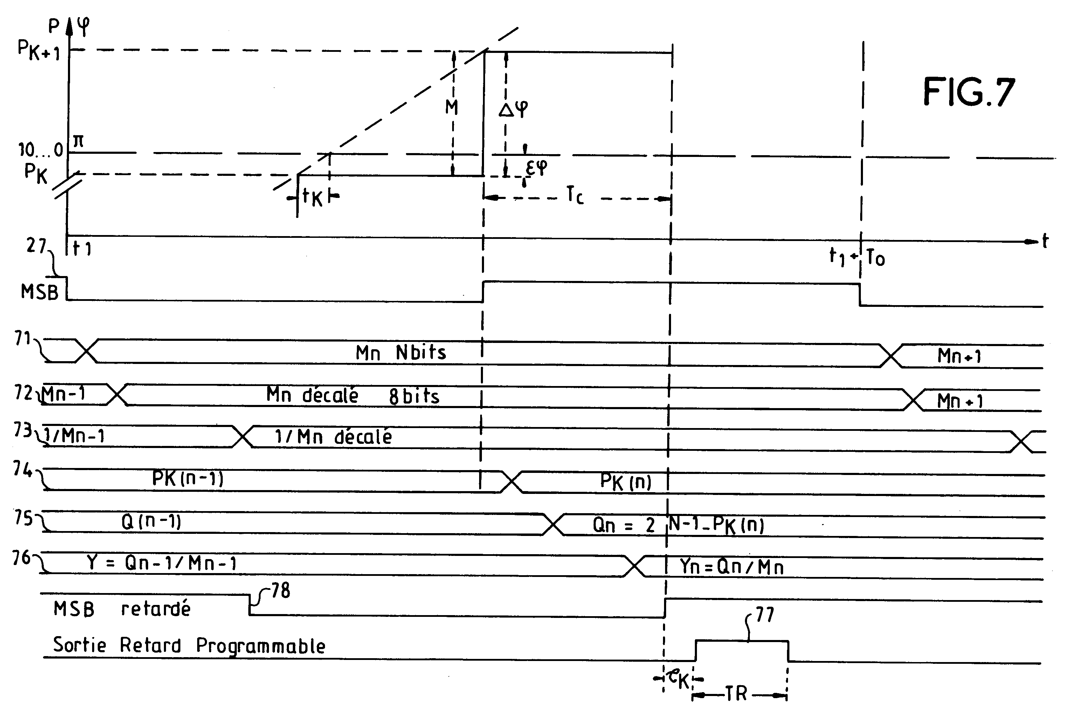

La figure 7 illustre, à l'aide de chronogrammes, le fonctionnement du dispositif illustré par la figure 4 mettant en oeuvre le procédé selon l'invention.

Une partie de l'allure de la phase dans le système d'axes P, φ et t ainsi que l'état du bit MSB illustrés de façon analogue à la figure 2 étant aussi représentés en regard des chronogrammes.

Une onde à fréquence variable Fo étant générée, cela entraîne notamment que :

- la valeur du nombre M est par exemple donnée par une mémoire contenant la loi de variation de fréquence dont les données $M_n$ de sortie sont échantillonnées à chaque période du signal de sortie généré, par exemple par le front descendant du bit de poids fort MSB de l'accumulateur ;
- le front montant du signal commandant le circuit de retard programmable 37 est par exemple celui du bit MSB précité retardé d'un coup d'horloge.

Sur la figure 7, un premier chronogramme représente différentes valeurs $M_n$, $M_{n+1}$ du nombre M en fonction du temps. A un temps donné $t_1$, fin de la période précédente, la $(n-1)^{ème}$ période, le bit MSB retombe à zéro et une nouvelle valeur $M_n$ du nombre M est appliquée, codée sur N bits, à l'entrée de l'accumulateur. Le décaleur 47 du nombre M fournit alors le nombre $M_n$ décalé sur 8 bits comme l'illustre un deuxième chronogramme 72. Ce mot décalé est appliqué à la table des inverses 49 qui délivre le nombre 1/Mn suivant un troisième chronogramme 73.

Le front montant du bit MSB échantillonne le nombre P(k) de la nième période qui est appliqué au soustracteur 46. Ce nombre noté P(k, n) est immédiatement supérieur à π. La sortie du soustracteur 46 délivre une valeur $Q_n$ du nombre $Q=2^{n-1}-P(k, n)$ suivant un quatrième chronogramme 74.

Le deuxième décaleur 48 fournit le nombre $Q_n$, décalé sur 8 bits suivant un cinquième chronogramme 75. Ce nombre $Q_n$ est appliqué à la deuxième entrée du multiplieur 50. Ce dernier qui avait déjà sur sa première entrée le nombre $\dfrac{1}{M_n}$ réalise le produit $Q_n$ x $\dfrac{1}{M_n}$ et délivre le nombre $Y_n = \dfrac{Q_n}{M_n}$ suivant un sixième chronogramme 76. Ce mot $Y_n$, de 8 bits est appliqué au circuit 37 par le front montant du signal d'horloge, ce front est celui qui suit le front d'horloge faisant passer à 1 le bit MSB, c'est à dire un temps Tc après ce front, Tc étant la période d'horloge précitée.

Dans ces conditions, le circuit 37 de retard programmable, ajusté de sorte que son retard pleine échelle soit égal à la période Tc d'horloge, fournit un signal 77 de durée $T_R$ dont le front montant est retardé de :

$$\tau_k = \frac{Y_n\, Tc}{2^8}$$ par rapport au front montant du signal MSB retardé 78. Ce signal MSB retardé 78 est par exemple retardé de une ou plusieurs périodes d'horloge Tc par rapport au bit de poids fort MSB précité. Cependant ce retard est le même à chaque période, il est inhérent en effet à la constitution du circuit donc fixe. Ce retard étant le même à chaque période, il n'entraîne donc qu'un retard fixe de la loi de fréquence Fo(t) du signal obtenu en sortie du circuit 37 à retard programmable.

Cela ne perturbe donc pas sa loi de variation et n'entraîne pas de bruit ni de modulations parasites.

L'exemple de dispositif de mise en oeuvre précédemment décrit permet de réduire le bruit de phase par une correction temporelle des fronts montants du signal de sortie de fréquence Fo.

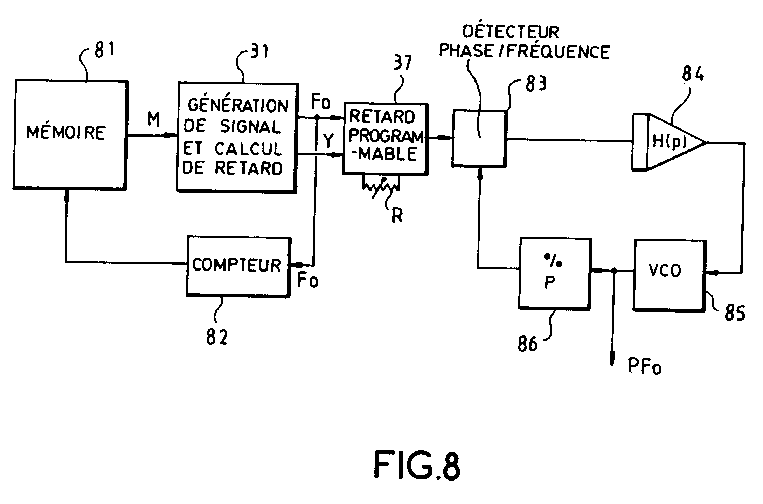

La figure 8 présente le synoptique d'un système de synthèse de fréquence utilisant le dispositif selon l'invention et où le signal de sortie Fo est recopié par une boucle de phase.

La loi de variation de la fréquence peut être quelconque, elle est déterminée par le nombre M qui peut par exemple être fourni par une mémoire 81 à N bits et de largeur déterminée par exemple par l'utilisateur. L'adressage de la mémoire est par exemple fait par la sortie d'un compteur 82 dont le nombre de bits est fonction de la longueur de la mémoire 81. Le compteur reçoit comme horloge le signal de sortie du circuit 31 de génération de signal selon l'invention à la fréquence Fo. En cas d'intégration, le compteur 82 peut par exemple être intégré dans ce circuit 31. La sortie du circuit 37 de génération de retard programmable est reliée à une première entrée d'un détecteur phase/fréquence 83 dont la sortie, délivrant une tension d'erreur, est reliée à un circuit de correction 84, la sortie de ce dernier étant reliée à l'entrée d'un circuit de commande de fréquence en tension 85 appelé VCO. La sortie de ce dernier délivre la fréquence de sortie du système de synthèse. Pour réaliser le rebouclage, la sortie du VCO 85 est aussi reliée à l'entrée d'un circuit diviseur 86 dont la sortie est reliée à l'autre entrée du détecteur phase/fréquence.

Dans le cas où le signal est recopié par une boucle de phase comme l'illustre la figure 8, il y a une variante de correction de l'erreur de phase ou du bruit de phase qui consiste à calculer à chaque période To du signal de sortie non corrigé l'erreur de phase qui est alors convertie en une tension analogique par un convertisseur numérique-analogique dont la tension de sortie est alors soustraite à la tension d'erreur du détecteur de phase de la boucle de phase.

D'après la relation (8), l'erreur de phase est :

$$Er(\varphi) = \frac{2^{N-1} - P(k)}{2^N}\, 2\pi$$

En notant l'erreur de phase relative $Z = \dfrac{Er(\varphi)}{2\pi}$, il vient :

$$Z = \frac{2^{N-1} - P(k)}{2^N} \quad (13)$$

soit

$$Z = \frac{Q}{2^N} \quad (14)$$

$Q = 2^{N-1} - P(k)$ étant la quantité précédemment définie.

Ce nombre Z est facile à produire car la division par $2^N$ n'est qu'un décalage fixe du nombre Q dont la plage de variation est comprise entre 0 et le nombre M précédemment défini, soit :

$$0 \leqq Q < M \quad (15)$$

d'où, d'après la relation (14) :

$$0 \leq Z \leq \frac{M}{2^N} \quad (16)$$

comme la condition de Nyquist impose que $M < 2^{N-1}$ il vient:

$$0 \leqq Z < \frac{1}{2} \quad (17)$$

En utilisant, par exemple pour corriger l'erreur de phase, un convertisseur numérique-analogique 8 bits, il suffit de prendre comme nombre Z les 8 bits suivant le bit de poids fort MSB du nombre Q afin d'utiliser toute la dynamique du convertisseur numérique-analogique.

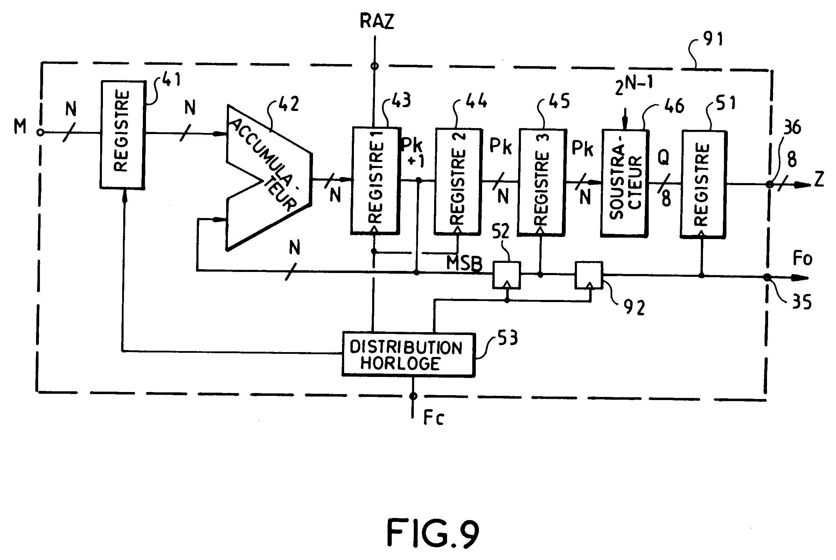

La synoptique du circuit de génération du signal est alors celui 91 présenté par la figure 9. Alors que celui de la figure 4 délivre le retard de correction à appliquer, celui-ci délivre l'erreur de phase relative Z. Par rapport au circuit de la figure 4, il ne comprend pas notamment les décaleurs 47, 48, le multiplieur 50 et la table des inverses 49. La sortie du soustracteur 46 délivrant le nombre φ est directement reliée à l'entrée du registre de sortie 51. Ce registre de sortie 51 est échantillonné par le bit de poids fort MSB du nombre P précité retardé d'un coup d'horloge par rapport au troisième registre 45 de façon que le signal de sortie de fréquence Fo et le mot Z d'erreur de phase relative soient simultanés. Pour cela, un deuxième circuit de synchronisation 92 est par exemple intercalé entre la sortie 35 du signal de fréquence Fo et le premier circuit de synchronisation 52. Son entrée d'horloge est reliée à la sortie du circuit de distribution d'horloge 53.

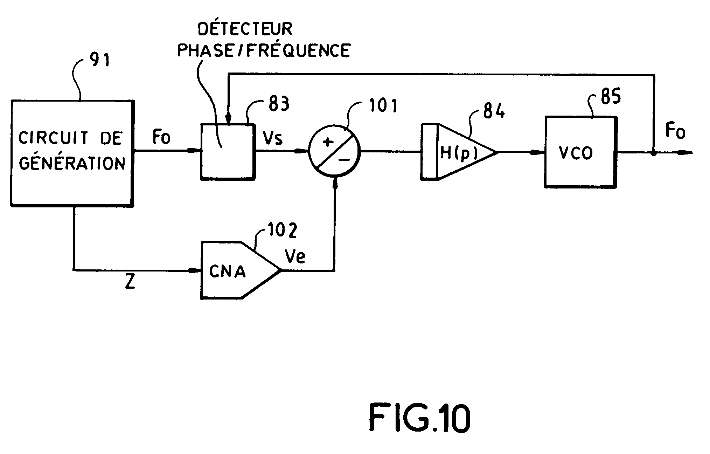

La figure 10 présente le synoptique d'une boucle avec correction de phase, constituant un système de synthèse de fréquence, utilisant le circuit de génération de signal 91 précédemment défini. La sortie 35 du signal de fréquence est reliée à la première entrée d'un détecteur phase/fréquence 83 dont la sortie est reliée à l'entrée positive d'un élément soustracteur 101. La sortie du circuit de génération 91 donnant l'erreur de phase relative Z, laquelle est par exemple codée sur 8 bits, est reliée à l'entrée d'un convertisseur numérique-analogique 102 dont la sortie est reliée à l'entrée négative de l'élément soustracteur 101, lequel réalise la différence entre son entrée positive et son entrée négative. Sa sortie, délivrant cette différence, est reliée à un circuit de correction 84 dont la sortie est reliée à l'entrée d'un VCO 85. Ce dernier délivre le signal de sortie corrigé, de fréquence Fo. Sa sortie est rebouclée sur l'autre entrée du détecteur phase/fréquence 83.

Pour que la correction apporte un gain sur le bruit correspondant au nombre de bits du convertisseur numérique-analogique 102, il faut une bonne adéquation entre la pente de conversion du détecteur phase/fréquence et la tension d'erreur de phase délivrée par le convertisseur numérique-analogique. Le détecteur phase/fréquence fournissant une tension :

$Vs = \frac{U}{2\pi} \varphi$ où φ est la phase et U la tension du détecteur phase/fréquence, d'une part, et le convertisseur numérique-analogique fournissant une tension :

$V_e = \frac{Z}{2^8} U_r = \frac{U_r}{2\pi} Er(\varphi)$ où $U_r$ est la tension de référence du convertisseur numérique-analogique d'autre part, il apparaît que l'adéquation entre le détecteur phase/fréquence 83 et le convertisseur numérique-analogique exige notamment que $U = U_r$, c'est-à-dire que tous deux soient alimentés par la même tension de référence.

L'élément soustracteur peut être réalisé par exemple au moyen d'un amplificateur opérationnel et de résistances de façon connue de l'homme du métier, cet amplificateur opérationnel ayant notamment un grand produit gain x bande et un faible "offset", et les résistances étant bien appairées, par exemple à mieux que $2.10^{-3}$, de façon à ne pas dégrader les performances du convertisseur numérique-analogique 102.

Les circuits de génération 31, 91 des figures 4 et 9 peuvent être regroupés en un même circuit délivrant à la fois le signal de fréquence Fo non corrigé, le retard à appliquer Y en cas de correction par retard, et l'erreur de phase relative Z. Ce circuit peut alors être utilisé pour l'une ou l'autre façon de corriger l'erreur de phase.

Les exemples de réalisation de dispositifs selon l'invention sont notamment totalement intégrables dans un circuit intégré ASIC du type prédiffusé, précaractérisé, mer de portes ou spécifique de façon connue de l'homme de métier.

Dans le cas général, la loi de variation de la fréquence est quelconque et est déterminée par le nombre d'entrée M précité qui peut être fourni par exemple par une mémoire extérieure, l'adressage de cette mémoire étant par exemple réalisé par la sortie d'un compteur comme l'illustre la figure 8.

Dans le cas où la loi de variation de fréquence est une dent de scie, il est possible de ne pas utiliser une mémoire mais d'utiliser un deuxième accumulateur, identique au premier par exemple, comportant notamment un sommateur. Le deuxième accumulateur fournit un nombre S au sommateur qui réalise la somme M + S appliquée à l'entrée du premier accumulateur. La fréquence Fo du signal généré est alors obtenue par la relation suivante :

$$Fo = \frac{Fc}{2^N}(M + S) \quad (18)$$

En notant So la valeur initiale du nombre S, ce dernier s'obtient en fonction du temps t par la relation suivante :

$$S = SoFc\,t \quad (19)$$

Des relations (18) et (19), Fo s'obtient en fonction du temps t par la relation suivante :

$$Fo = \frac{Fc}{2^N}(M + SoFc\,t) = F_1 + pt \quad (20)$$

Si le mot S est calculé sur les L bits par exemple, caractéristiques de la dent de scie de fréquence sont :

- fréquence de départ = $F_1 = \dfrac{FcM}{2^N}$

- pente $p = \dfrac{So\,Fc^2}{2^N}$

- durée $Td = 2^L\,\dfrac{Tc}{So}$

- excursion $Df = \dfrac{Fc}{2^{N-L}}$

Pour obtenir une excursion Df égale à Fc/4 par exemple, il faut L = N-2.

Les dispositifs précédemment décrits ne se limitent pas aux nombres de bits indiqués, notamment les éléments à 8 bits.


## Revendications

1. Procédé de génération d'un signal à fréquence commandée (Fo), la fréquence étant commandée par la variation de sa phase, la phase étant incrémentée d'un pas constant ($\Delta\varphi$) à l'intérieur d'une période (To) du signal généré (Fo), cette incrémentation ayant lieu à chaque période (Tc) d'un signal d'horloge (Fc), la phase étant représentée par un nombre binaire (P), la phase correspondant à $2\pi$ quand tous les bits du nombre binaire (P) sont égaux à 1, caractérisé en ce qu'il consiste dans chaque période (To) du signal généré (Fo), dans une première étape à calculer une erreur de phase (Er ($\varphi$)), cette erreur de phase étant représentée par la différence entre un premier nombre binaire (100 ... 0), représentant $\pi$ et le nombre binaire (P(k)) obtenu par incrémentation du pas de phase ($\Delta\varphi$) numérisé (M) et immédiatement inférieur au premier nombre binaire (100 ... 0) représentant $\pi$ et dans une deuxième étape à corriger la phase (P) de l'erreur de phase ($E_r(\varphi)$) à partir du nombre binaire calculé (1000 ... 0 - P(k)) représentant cette erreur, la correction étant effectuée sur un signal synchrone du bit de poids fort (MSB) du nombre binaire (P) représentant la phase.

2. Procédé selon la revendication 1, caractérisé en ce qu'à l'erreur de phase ($Er(\varphi)$ correspondant un écart de temps ($\tau$k), la période ($E_r(\varphi)$) du signal généré (Fo) est retardée de cet écart de temps ($\tau$k), le rapport

$$\left(\frac{E_r(\varphi)}{\tau k}\right)$$

de l'erreur de phase ($Er(\varphi)$) sur l'écart de temps ($\tau$k) à l'intérieur de chaque période (To) du signal généré (Fo) étant égal au rapport

$$\left(\frac{\Delta(\varphi)}{Tc}\right)$$

du pas de phase ($\Delta(\varphi)$) sur la période (Tc) du signal d'horloge (Fc) à l'intérieur de cette même période.

3. Procédé selon la revendication 1, caractérisé en ce que le signal généré (Fo) étant recopié dans une boucle de phase (83, 84, 85, 101), l'erreur de phase relative (Z) correspondant à l'erreur de phase divisé par $2\Pi$ ($Er(\varphi)/2\pi$), sur nombre binaire (Z) la représentant est converti analogiquement, la valeur analogique obtenue étant soustraite à la tension d'erreur d'un détecteur de phase (83) de la boucle de phase, l'entrée du détecteur étant le signal synchrone du bit de poids fort (MSB) du nombre binaire (P) représentant la phase.

4. Dispositif pour la mise en oeuvre du procédé selon l'une quelconque des revendications précédentes, caractérisé en ce qu'il comprend au moins :
   - un accumulateur numérique (42, 43) auquel est appliqué le nombre binaire (M) représentant le pas de phase ($\Delta\varphi$) et fournissant le nombre binaire (P) représentant la phase ;
   - des moyens de calcul (44, 45, 46) de la quantité $Q = 2^{N-1} - P(k)$, N étant le nombre de bits de l'accumulateur et P(k) étant le nombre binaire obtenu en sortie de l'accumulateur, immédiatement inférieur à $2^{N-1}$ ;
   - des moyens de synchronisation (52, 92) du signal à corriger sur le bit de poids fort (MSB) du nombre binaire (P) représentant la phase ;
   - des moyens de correction (47, 48, 49, 50, 37, 102) de la phase du signal fourni par les moyens de synchronisation (52, 92), cette correction étant fonction de la quantité $Q = 2^{N-1} - P(k)$.

**5.** Dispositif selon la revendication 4, caractérisé en ce que les moyens de correction sont constitués au moins :

- de moyens de calcul (47, 48, 49, 50) du rapport Y = Q/M, M étant le nombre binaire représentant le pas de phase ($\Delta\varphi$) ;
- de moyens de retard programmable (37), ces moyens retardant le signal de sortie des moyens de synchronisation (52) d'un retard :

$$tr = \frac{Y}{2^L}\,Tc,$$ le rapport Y étant appliqué à l'entrée de consigne des moyens de retard, Tc étant la période du signal d'horloge (Fc) et L étant un nombre de bit donné inférieur ou égal à N, la sortie des moyens de retard programmable (37) fournissant le signal généré (Fo).

**6.** Dispositif selon la revendication 4, caractérisé en ce que les moyens de correction sont constitués au moins d'un convertisseur numérique-analogique (102) prenant en compte un nombre donné de premiers bits suivants le bit de poids fort de la quantité Q, la sortie du convertisseur numérique-analogique (102) étant reliée à l'entrée négative d'un soustracteur (101) dont l'entrée positive est reliée à la sortie d'un détecteur de phase (83), une entrée de ce dernier étant le signal synchrone du bit de poids fort du nombre binaire (P) de sortie de l'accumulateur (42, 43), la sortie du soustracteur (101) étant reliée à un circuit de correction (84) dont la sortie est reliée à l'entrée d'un circuit de commande de fréquence en tension (85), l'entrée de ce circuit étant reliée à l'autre entrée du détecteur de phase (83) et fournissant le signal généré (Fo).

**7.** Dispositif selon la revendication 5, caractérisé en ce qu'il comprend au moins :

- un accumulateur numérique, constitué d'un sommateur (42) et d'un premier registre (43) relié à la sortie du sommateur, à une entrée du sommateur (42) étant appliqué le nombre binaire (M) représentant le pas de phase ($\Delta\varphi$), son autre entrée étant reliée à la sortie du premier registre (43) ;
- un deuxième registre (44) relié à la sortie du premier registre (43) ;
- un troisième registre (45) relié à la sortie du deuxième registre (44) ;
- un soustracteur (46) relié à la sortie du troisième registre (45) ;
- un premier décaleur (47) prenant un nombre donné de premiers bits significatifs du nombre binaire (M) appliqué à l'accumulateur (42, 43) ;
- un deuxième décaleur (48) relié à la sortie du soustracteur (46) et prenant le même nombre donné de premiers bits significatifs du nombre en sortie du soustracteur ;
- une mémoire contenant une table des inverses (49) dont le bus d'adresse est relié à la sortie du premier décaleur (47), cette table délivrant le nombre binaire (1/M) inverse du nombre binaire (M) représentant le pas de phase ;
- un multiplieur (50) dont une entrée est reliée à la sortie du deuxième décaleur (48) et l'autre entrée est reliée au bus de données de la mémoire (49) ;
- un registre de sortie (51) relié à la sortie du multiplieur (50), la sortie du registre étant reliée à l'entrée de consigne des moyens de retard (37).

**8.** Dispositif selon la revendication 7, caractérisé en ce qu'un décaleur (47, 48) est constitué de registres à bascule (54, 55, 56, 57, 58) à sortie 3 états en quantité N-D, N étant le nombre de bit de l'accumulateur et D le nombre donné de premiers bits significatifs pris par le décaleur, tous les registres (54, 55, 56, 57, 58) étant décalés les uns par rapport aux autres d'un bit et toutes leurs sorties étant connectées entre elles, la sélection de chacun de ces registres se faisant par une commande d'activation à son entrée d'activation (OE), le décalage des registres est tel que les D premiers bits du nombre à décaler ($A_N A_{N-1} .. A_{N-7}$) sont connectés aux entrées d'un premier registre (54), les D premiers bits pris à partir du deuxième bit ($A_{N-1}$) sont connectés aux entrées d'un deuxième registre (55), les D premiers bits pris à partir du troisième bit ($A_{N-2}$) sont connectés aux entrées d'un troisième registre (56), les D derniers bits étant connectés aux entrées d'un dernier registre (58), les entrées d'activation (OE) étant commandées par des signaux ($R_M$, $R_{M-1}$, $R_{m-2}$, ... $R_8$) indiquant le rang de décalage, un seul de ces signaux commandant les entrées d'activation à la fois, les rangs étant fournis par des circuits de détection de rang réalisant des fonctions booléennes sur le nombre à décaler, le signal de commande d'un registre de rang i étant le résultat de la fonction "et" logique entre les N-i premiers bits du nombre appliquer à l'entrée du décaleur (47, 48).

**9.** Dispositif selon l'une quelconque des revendications 4 à 8, caractérisé en ce qu'il est utilisé dans un système à synthèse de fréquence.

FIG.1

FIG.2

FIG.3

EP 0 623 867 A1

**FIG.4**

EP 0 623 867 A1

DETECTEUR
DE RANG    59

$A_N A_{N-1} A_{N-2}$    $A_{N-7} A_{N-8} A_{N-9}$    A8    A1 — M,Q

54    OE    → Rn
8    55
OE    → Rn-1
8    56
OE    → Rn-2
8    57
OE    → Rn-3
8

8    58
8    OE — R8

8

Vers multiplieur ou
table des inverses

## FIG.5

FIG.6

FIG.7

EP 0 623 867 A1

P φ

P_{K+1}

10...0 π

P_K

M

Δφ

εφ

$t_K$

$T_c$

27 t1

$t_1 + T_0$

t

MSB

71 Mn Nbits    Mn+1

72 Mn-1    Mn décalé 8 bits    Mn+1

73 1/Mn-1    1/Mn décalé

74 PK(n-1)    PK(n)

75 Q(n-1)    $Q_n = 2^{N-1} - P_K(n)$

76 $Y = Q_{n-1}/M_{n-1}$    $Y_n = Q_n/M_n$

MSB retardé    78

Sortie Retard Programmable    77

$\tau_K$    TR

EP 0 623 867 A1

DÉTECTEUR
PHASE / FRÉQUENCE

81

MÉMOIRE

M

31

GÉNÉRATION
DE SIGNAL
ET CALCUL
DE RETARD

Fo

Y

37

RETARD
PROGRAM
-MABLE

R

83

84

H(p)

82

COMPTEUR

Fo

86

%
P

85

VCO

PFo

FIG.8

FIG.9

FIG.10

**EP 0 623 867 A1**

Office européen
des brevets

**RAPPORT DE RECHERCHE EUROPEENNE**

Numero de la demande
EP 94 40 0956

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | GB-A-2 217 535 (RACAL RESEARCH LIMITED) <br> * abrégé; figure 5 * <br> --- | 1 | G06F1/03 |
| A | PROCEEDINGS OF THE 44TH ANNUAL SYMPOSIUM ON FREQUENCY CONTROL ,, 23 Mai 1990, NEW YORK, USA <br> pages 498 - 510 <br> VENCESLAV F. KROUPA: 'Spectral purity of direct digital frequency synthesizers' <br> * figure 6 * <br> --- | 1 | |
| A | PATENT ABSTRACTS OF JAPAN <br> vol. 7, no. 88 (E-170) (1233) 12 Avril 1983 <br> & JP-A-58 015 334 (NIPPON DENKI K.K.) 28 Janvier 1983 <br> * abrégé * <br> ----- | 3 | |
| | | | **DOMAINES TECHNIQUES RECHERCHES (Int.Cl.5)** <br><br> G06F <br> H03L |

Le présent rapport a été établi pour toutes les revendications

| Lieu de la recherche | Date d'achèvement de la recherche | Examinateur |
|---|---|---|
| LA HAYE | 29 Juillet 1994 | Peeters, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

21